(19) Europäisches Patentamt / European Patent Office / Office européen des brevets

(11) **EP 4 194 892 A1**

(12) **EUROPEAN PATENT APPLICATION**
published in accordance with Art. 153(4) EPC

(43) Date of publication:
**14.06.2023 Bulletin 2023/24**

(21) Application number: **21859855.5**

(22) Date of filing: **30.06.2021**

(51) International Patent Classification (IPC):
**G01S 7/487** (2006.01)  **G01S 7/486** (2020.01)
**G01S 17/08** (2006.01)

(52) Cooperative Patent Classification (CPC):
**G01S 7/486; G01S 7/487; G01S 17/08;**
**G01S 17/14; G01S 17/18; G01S 17/894**

(86) International application number:
**PCT/CN2021/103517**

(87) International publication number:
**WO 2022/042013 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 CN 202010899620**

(71) Applicant: **Huawei Technologies Co., Ltd.**
**Shenzhen, Guangdong 518129 (CN)**

(72) Inventors:
• **ZHOU, Junwei**
  **Shenzhen, Guangdong 518129 (CN)**
• **YANG, Bing**
  **Shenzhen, Guangdong 518129 (CN)**
• **FENG, Xiaogang**
  **Shenzhen, Guangdong 518129 (CN)**
• **ZHUANG, Kaiyuan**
  **Shenzhen, Guangdong 518129 (CN)**
• **SONG, Xiaogang**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **DTOF SENSING MODULE, TERMINAL DEVICE, AND DISTANCE MEASUREMENT METHOD**

(57)     Provided are a direct time of flight dTOF sensing module, a terminal device, and a ranging method, to resolve a problem that in a conventional technology, a dTOF sensing module cannot adapt to different detection scenarios to some extent. Every K light sensitive units (401) of W light sensitive units (401) included in the dTOF sensing module share a first storage space. A processing control unit (403) is configured to control gating of N light sensitive units (401). The gated N light sensitive units (401) occupy the first storage space, and Q time slice bins are allocated to each gated light sensitive unit (401), so that the dTOF sensing module operates in a first mode or a second mode. A quantity of gated light sensitive units (401) corresponding to the first mode is greater than a quantity of gated light sensitive units (401) corresponding to the second mode, and/or a quantity of time slice bins allocated to each light sensitive unit (401) corresponding to the first mode is less than a quantity of time slice bins allocated to each light sensitive unit (401) corresponding to the second mode, so that the dTOF sensing module is flexibly applicable to different detection scenarios.

FIG. 4

**Description**

**CROSS-REFERENCE TO RELATED APPLICATIONS**

This application claims priority to Chinese Patent Application No. 202010899620.9, filed with the China National Intellectual Property Administration on August 31, 2020, and entitled "DTOF SENSING MODULE, TERMINAL DEVICE, AND RANGING METHOD", which is incorporated herein by reference in its entirety.

**TECHNICAL FIELD**

This application relates to the field of sensing module technologies, and in particular, to a dTOF sensing module, a terminal device, and a ranging method.

**BACKGROUND**

A three-dimensional (three-dimensional, 3D) sensing technology has become a research hotspot of next-generation sensors. Currently, technologies applicable to 3D sensors mainly include stereoscopic imaging, structured light, time of flight (time-of-flight, TOF), and the like. TOF has advantages of a large detection distance and a high resolution, and is an important technology of next-generation 3D sensors.

For ranging, a direct time of flight (direct time of flight, dTOF) method is used to calculate a depth by directly measuring time of flight of ultrashort pulses between a transmitter and a receiver. A common method for calculating a distance based on histogram (histogram) statistics is used. In dTOF measurement in a conventional technology, due to a limitation of a storage space of a detector, a formed image has a low resolution.

To form a high image resolution, a time-division multiplexing storage space is usually used in the conventional technology. For example, a plurality of light sources are arranged into an array, and one or more rows of light sources are driven in a time-division manner to scan an entire field of view (field of view, FOV), to reuse the storage space in a time-division manner, and then a complete field of view (FOV) is obtained through splicing. This scanning manner has a complex splicing process, requires long scanning time, and cannot adapt to different detection scenarios.

**SUMMARY**

This application provides a dTOF sensing module, a terminal device, and a ranging method, to resolve a problem that in a conventional technology, a dTOF sensing module cannot be applied to different scenario requirements to some extent.

According to a first aspect, this application provides a dTOF sensing module. The dTOF sensing module includes W light sensitive units, H histogram data storage units, and a processing control unit. Every K light sensitive units in the W light sensitive units share a first storage space. A size of the first storage space is a size of a storage space corresponding to one histogram data storage unit. The processing control unit is configured to control gating of N light sensitive units and allocate Q time slice bins to each gated light sensitive unit. The dTOF sensing module may operate in a first mode or a second mode based on the N gated light sensitive units and the Q time slice bins allocated to each gated light sensitive unit. A quantity N of gated light sensitive units corresponding to the first mode is greater than a quantity N of gated light sensitive units corresponding to the second mode; and/or a quantity Q of time slice bins allocated to each light sensitive unit corresponding to the first mode is less than a quantity Q of time slice bins allocated to each light sensitive unit corresponding to the second mode. The N light sensitive units occupy the first storage space. The N light sensitive units are N of the K light sensitive units sharing the first storage space, where K is less than or equal to W, W and H are both integers greater than or equal to 2, N is an integer less than or equal to K, and Q is a positive integer.

Based on this solution, a quantity of gated light sensitive units and a quantity of time slice bins allocated to each gated light sensitive unit are controlled, so that the dTOF sensing module may operate in different modes, namely, the first mode or the second mode. Further, the quantity of the gated light sensitive units corresponding to the first mode is greater than the quantity of the gated light sensitive units corresponding to the second mode, and a larger quantity of gated light sensitive units indicates a higher resolution. Therefore, when the dTOF sensing module operates in the first mode, the dTOF sensing module may be applied to a scenario requiring a high resolution. When the dTOF sensing module operates in the second mode, the dTOF sensing module may be applied to a scenario requiring a low resolution. The quantity of time slice bins allocated to each light sensitive unit corresponding to the first mode is less than the quantity of time slice bins allocated to each light sensitive unit corresponding to the second mode. Therefore, when the dTOF sensing module operates in the first mode, the dTOF sensing module may be applied to a scenario in which a detection distance is short. When the dTOF sensing module operates in the second mode, the dTOF sensing module may be applied to a scenario in which a detection distance is large. In other words, the quantity of the gated light sensitive units and the quantity of the time slice bins allocated to each gated light sensitive unit are controlled, so that histogram data storage units of a same size may store histogram data corresponding to different quantities of light sensitive units. In other words, the quantity of the gated light sensitive units may be flexibly controlled and the quantity of the time slice bins may be flexibly allocated to the gated light sensitive units without changing the storage space of the histogram data storage units, so that the dTOF sensing module is flexibly applicable to different scenarios.

In a possible implementation, the first storage space includes M storage blocks, and M is a positive integer. The processing control unit is specifically configured to: determine a first quantity of storage blocks occupied by each gated light sensitive unit; and allocate the Q time slice bins to each gated light sensitive unit based on a quantity of time slice bins that can be stored in the storage blocks and the first quantity.

The first storage space is divided into the M storage blocks, so that the first quantity of the storage blocks occupied by each light sensitive unit can be further determined. This helps accurately allocate the quantity of time slice bins to each light sensitive unit.

In a possible implementation, the first quantity is $M \times \frac{1}{N}$, and $Q = M \times \frac{1}{N} \times F$, where F represents the quantity of the time slice bins that can be stored in the storage blocks.

In a possible implementation, the storage block is configured to store data generated when at least one light sensitive unit detects a first distance, and the first distance is a distance that can be detected by the light sensitive unit.

The storage block may store a maximum amount of data generated by at least one light sensitive unit. In this way, it can be ensured that all data generated by each light sensitive unit can be stored in the first storage space.

Further optionally, the first distance detected by the light sensitive unit is C/2 x T x Q, where C is a speed of light, and T is a period of the time slice bin.

In a possible implementation, the first storage space is provided by one of the H histogram data storage units; or the first storage space is provided by at least two of the H histogram data storage units.

When the first storage space is provided by at least two histogram data storage units, the corresponding light sensitive units may store generated data in each of the at least two histogram data storage units that provide the first storage space in parallel. This helps improve data storage efficiency.

In a possible implementation, the W light sensitive units are a light sensitive unit array; and the K light sensitive units are K adjacent light sensitive units in a column of the light sensitive unit array, or K adjacent light sensitive units in a row of the light sensitive unit array.

The K adjacent light sensitive units in a column or a row of the light sensitive unit array are gated. This helps reduce complexity of a connection line between the light sensitive units and a bus.

In a possible implementation, when N is less than K, the W light sensitive units are gated in L times, and L is determined based on K and N.

All the W light sensitive units are gated in L times, so that a full resolution can be covered. In other words, when a detection distance is large, a high resolution may also be obtained through time-division gating of the light sensitive units.

In a possible implementation, a manner of controlling gating of each of the N light sensitive units includes row enable control and column enable control; row enable control; or column enable control.

In a possible implementation, the processing control unit is specifically configured to: receive a first instruction, and control gating of the N light sensitive units based on the first instruction, where the first instruction is determined based on a target resolution; and receive a second instruction, and allocate the Q time slice bins to each gated light sensitive unit based on the second instruction, where the second instruction is determined based on the target resolution and a target distance.

The processing control unit receives the first instruction and the second instruction, to flexibly control a quantity of gated light sensitive units and flexibly allocate a quantity of time slice bins to the gated light sensitive units, so that the dTOF sensing module is flexibly applicable to different scenarios. For example, the first mode may be applicable to a short-distance detection scenario that requires a high resolution, and the second mode may be applicable to a long-distance detection scenario that does not require a high resolution.

According to a second aspect, this application provides a terminal device, including a processor and the dTOF sensing module in any one of the first aspect or the implementations of the first aspect. The processor is configured to process information obtained when the dTOF sensing module operates in a first mode or a second mode.

According to a third aspect, this application provides a ranging method. The method includes: controlling gating of N light sensitive units based on a target resolution and a target distance, and allocating Q time slice bins to each gated light sensitive unit, where the N light sensitive units occupy a first storage space, the N light sensitive units are N of K light sensitive units sharing the first storage space, N is an integer less than or equal to K, and Q is a positive integer; performing distance detection in a first mode or a second mode based on the N gated light sensitive units and the Q time slice bins allocated to each gated light sensitive unit, where a quantity N of gated light sensitive units corresponding to the first mode is greater than a quantity N of gated light sensitive units corresponding to the second mode, and a quantity Q of time slice bins allocated to each light sensitive unit corresponding to the first mode is less than a quantity Q of time slice bins allocated to each light sensitive unit corresponding to the second mode.

The method may be applied to a direct time of flight dTOF sensing module. The dTOF sensing module includes W light sensitive units, H histogram data storage units, and a processing control unit. K light sensitive units of the W light sensitive units share the first storage space. A size of the first storage space is a size of a storage space corresponding to one histogram data storage unit. K is less than or equal to W. Both W and H are integers greater than or equal to 2.

In a possible implementation, the first storage space includes M storage blocks, and M is a positive integer. The method may determine a first quantity of storage blocks occupied by each gated light sensitive unit; and allocate the Q time slice bins to each gated light sensitive unit based on a quantity of time slice bins that can be stored in the storage blocks and the first quantity.

In a possible implementation, the first quantity is $M \times \frac{1}{N}$, and $Q = M \times \frac{1}{N} \times F$, where F represents the quantity of the time slice bins that can be stored in the storage blocks.

In a possible implementation, the storage block is configured to store data generated when at least one light sensitive unit detects a first distance, and the first distance is a distance that can be detected by the light sensitive unit.

In a possible implementation, the first distance that can be detected by the light sensitive unit is $C/2 \times T \times Q$, where C is a speed of light, and T is a period of the time slice bin.

In a possible implementation, the first storage space is provided by one of the H histogram data storage units; or the first storage space is provided by at least two of the H histogram data storage units.

In a possible implementation, the W light sensitive units are a light sensitive unit array; and the K light sensitive units are K adjacent light sensitive units in a column of the light sensitive unit array, or K adjacent light sensitive units in a row of the light sensitive unit array.

In a possible implementation, when N is less than K, the W light sensitive units are gated in L times, and L is determined based on K and N.

In a possible implementation, a manner of controlling gating of each of the N light sensitive units includes row enable control and column enable control; row enable control; or column enable control.

In a possible implementation, the method may receive a first instruction, and control gating of the N light sensitive units based on the first instruction, where the first instruction is determined based on the target resolution; and receive a second instruction, and allocate the Q time slice bins to each gated light sensitive unit based on the second instruction, where the second instruction is determined based on the target resolution and the target distance.

According to a fourth aspect, this application provides a terminal device, including the dTOF sensing module in any one of the first aspect or the implementations of the first aspect, a memory, and a processor. The memory is configured to store a program or instructions. The processor is configured to invoke the program or the instructions to control the dTOF sensing module to perform the method in any one of the third aspect or the possible implementations of the third aspect.

According to a fifth aspect, this application provides a computer-readable storage medium. The computer-readable storage medium stores a computer program or instructions. When the computer program or the instructions are executed by a terminal device, the terminal device is enabled to perform the method in any one of the third aspect or the possible implementations of the third aspect.

According to a sixth aspect, this application provides a computer program product. The computer program product includes a computer program or instructions. When the computer program or the instructions are executed by a terminal device, the terminal device is enabled to perform the method in any one of the third aspect or the possible implementations of the third aspect.

For technical effects that can be achieved in any one of the second aspect to the sixth aspect, refer to descriptions of beneficial effects in the first aspect. Details are not described herein again.

**BRIEF DESCRIPTION OF DRAWINGS**

FIG. 1a is a schematic diagram of a structure of a detector according to an embodiment of this application;
FIG. 1b is a schematic diagram of a histogram according to this application;
FIG. 2 is a schematic diagram of an architecture of a laser ranging system according to this application;
FIG. 3 is a schematic diagram of a structure of a dTOF sensing module according to this application;
FIG. 4 is a schematic diagram of a structure of a dTOF sensing module according to this application;
FIG. 5a is a schematic diagram of a configuration relationship between pixels and a first storage space according to this application;
FIG. 5b is a schematic diagram of another configuration relationship between pixels and a first storage space according to this application;

FIG. 6a is a schematic diagram of a relationship between a pixel array and a gated pixel according to this application;

FIG. 6b is a schematic diagram of another relationship between a pixel array and a gated pixel according to this application;

FIG. 6c is a schematic diagram of another relationship between a pixel array and a gated pixel according to this application;

FIG. 7a is a schematic diagram of a relationship between pixels and storage blocks occupied by pixels according to this application;

FIG. 7b is a schematic diagram of another relationship between pixels and storage blocks occupied by pixels according to this application;

FIG. 7c is a schematic diagram of another relationship between pixels and storage blocks occupied by pixels according to this application;

FIG. 8a is a schematic diagram of a pixel array according to this application;

FIG. 8b is a schematic diagram of another pixel array according to this application;

FIG. 8c is a schematic diagram of another pixel array according to this application;

FIG. 8d is a schematic diagram of another pixel array according to this application;

FIG. 8e is a schematic diagram of another pixel array according to this application;

FIG. 8f is a schematic diagram of another pixel array according to this application;

FIG. 8g is a schematic diagram of another pixel array according to this application;

FIG. 8h is a schematic diagram of another pixel array according to this application;

FIG. 8i is a schematic diagram of time-division gated pixels according to this application;

FIG. 8j is a schematic diagram of another time-division gated pixels according to this application;

FIG. 8k is a schematic diagram of another time-division gated pixels according to this application;

FIG. 8l is a schematic diagram of another time-division gated pixels according to this application;

FIG. 8m is a schematic diagram of another time-division gated pixels according to this application;

FIG. 9 is a schematic flowchart of a ranging method according to this application; and

FIG. 10 is a schematic diagram of a structure of a terminal device according to this application.

**DESCRIPTION OF EMBODIMENTS**

The following describes in detail embodiments of this application with reference to accompanying drawings.

1. Single photon avalanche diode (single-photon avalanche diode, SPAD)

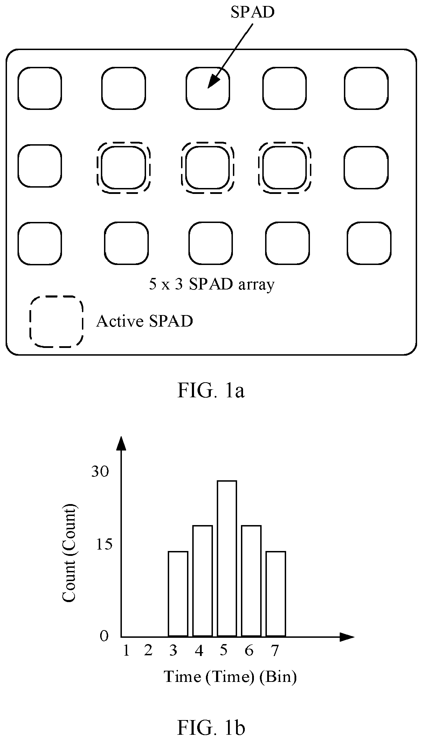

A single photon avalanche diode is also referred to as a single photon detector, and is a photoelectric detection avalanche diode with a single photon detection capability. The SPAD has high sensitivity, and is triggered when a photon is detected. After the SPAD is triggered, it usually takes a specific period of time (for example, approximately 10 ns) for the SPAD to restore to an initial state. Therefore, the SPAD may be used to detect whether there is a photon. Generally, there are a plurality of SPADs in each detector in a sensor. FIG. 1a is an example of a schematic diagram of a structure of a possible detector. The detector may include a $5 \times 3$ SPAD array. In other words, the $5 \times 3$ SPAD array may form a schematic diagram of a structure of a detector. In a possible case, all the $5 \times 3$ SPADs may be gated at a time. In another possible case, some of the $5 \times 3$ SPADs may be gated at a time. For example, active SPADs in FIG. 1a are gated SPADs.

The feature of the SPAD is as follows: Under a reverse bias voltage, the SPAD receives a photon and generates a carrier. The carrier moves under the action of an electric field and collides with an atom in a semiconductor material to generate more carriers. In this way, avalanche effect is triggered repeatedly, to generate a large quantity of carriers and form a large current signal. If the diode is broken down, a pulse current output is formed for current detection. In this application, one pixel may include one or more SPADs.

2. Time slice bin

The time slice bin indicates a minimum time unit during direct time of flight (direct time of flight, dTOF) detection, and is usually denoted as Bin. The minimum means that the time slice bin cannot be further divided. For example, 250 ps is a bin. For another example, 300 ps is a bin. The bin may determine a minimum time resolution of a dTOF sensing module. Each bin records a count in the bin. For example, 1 is added to a bin corresponding to pulse occurrence time.

3. Time slice bin bit

The time slice bin bit (denoted as BinBit, namely, bits of a bin) indicates a maximum quantity of binary bits that can be used for a count in each bin during dTOF detection. For example, BinBit = 8 indicates that each bin can store a maximum of $8^{th}$ power of 2 (namely, 256) counts. BinBit determines an amount of information that can be stored in the bin. It may also be understood that the amount of information that can be stored in the bin is denoted as BinBit.

4. Maximum quantity of time slice bins

The maximum quantity of time slice bins (denoted as BinNum) indicates a maximum quantity of bins that can be used in a histogram corresponding to a pixel (Pixel) (namely, a light sensitive unit) during dTOF detection. A quantity of time slice bins that can be stored in one storage block may be understood as a maximum quantity of time slice bins corresponding to one storage block. If one pixel occupies one storage block, a quantity of bins that can be allocated to one pixel is BinNum. BinNum and a least significant bit (least significant bit, LSB) jointly determine a detection range during dTOF detection. In other words, BinNum, the LSB, and the detection range affect each other. In this application, the LSB corresponds to a time unit. For example, if the LSB is 250 ps, it indicates that a minimum time statistical unit is 250 ps. In other words, a period of one bin is 250 ps.

5. Histogram (Histogram)

The histogram is statistical histogram data obtained based on a count in each bin in a time unit of a bin for time-correlated single photon counting (time-correlated single photon counting, TCSPC) data during dTOF detection. FIG. 1b is a schematic diagram of a histogram according to this application. A horizontal coordinate represents time in a unit of a bin; a moment at which a photon triggers an avalanche on a SPAD to generate a signal falls into a corresponding bin; and a vertical coordinate represents a count (namely, a count value). In the histogram, BinNum = 5. It should be understood that FIG. 1b is a histogram output by one pixel. Based on the obtained histogram, which bin is a deadline may be determined by using a centroid method, a peak value method, or the like, and a distance to a target may be determined based on the deadline.

6. Histogram data storage unit

The histogram data storage unit is configured to store a histogram. The histogram data storage unit includes a plurality of storage blocks. One storage block may store a plurality of histograms. In this application, a quantity of storage blocks included in the histogram data storage unit is less than or equal to a quantity of pixels. One storage block corresponds to one BinNum. An amount of information that can be stored in each storage block = BinNum $\times$ BinBit. Each storage block may satisfy a space for storing data required for a maximum detected distance reached by one pixel.

7. Pixel time slice bin

The pixel time slice bin (denoted as PixelBin) indicates a quantity of bins allocated to each pixel that is gated (or referred to as opened or enabled). For example, each gated (opened) pixel may be allocated to one bin. For another example, each gated (opened) pixel may be allocated to two or more bins. For another example, each gated (opened) pixel may be allocated to all bins (namely, BinNum). It should be understood that, a gated pixel means that a state of a logical switch of a pixel is controlled to be off by using an electrical signal.

8. Light sensitive unit

A light sensitive element uses a photoelectric conversion function of a photoelectric device. An optical signal on a light sensitive surface is converted into an electrical signal in a corresponding proportion relationship with the optical signal. For example, the light sensitive unit may be a photon detector (photon detector, PD), a high-speed photodiode, a charge coupled device (charge coupled device, CCD), a complementary metal oxide semiconductor (complementary metal-oxide-semiconductor, CMOS) photoelectric transistor, and a single photon avalanche diode.

In this application, the dTOF sensing module may be applied to a terminal device, for example, a mobile phone, or may be applied to laser radar, for example, vehicle-mounted laser radar or airborne laser radar.

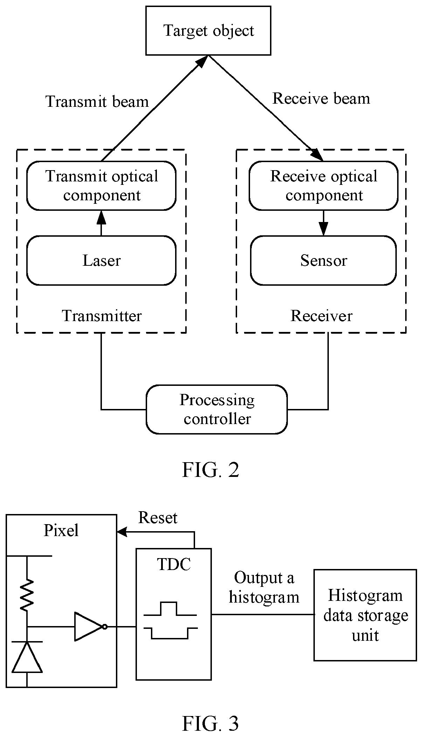

The dTOF sensing module may be used for distance measurement, namely, distance detection. FIG. 2 is a schematic diagram of an architecture of a laser ranging system to which this application may be applied. The laser ranging system includes a transmitter and a receiver. The transmitter mainly includes a laser and a transmit optical component. The receiver mainly includes a sensor and a receive optical component. The laser is used as a light source, and is configured to emit a laser beam. The laser beam from the laser is emitted to a target area by using the transmit optical component. After the laser beam is emitted to the target area (the laser beam emitted to the target area may be referred to as a transmit beam), a target object may exist in the target area, and the laser beam is reflected by the target object in the target area to obtain an echo optical signal (or referred to as a receive beam). The receive optical component propagates the echo optical signal to the sensor. The sensor is configured to determine a distance between the laser ranging system and the target object based on the received echo optical signal. For example, s = C $\times$ t/2, where s represents the distance between the laser ranging system and the target object, C represents a speed of light, and t represents duration of a light beam from the transmitter to the target object and then from the target object to the receiver.

It should be noted that the system architecture and the application scenario described in this application are intended to describe the technical solutions in this application more clearly, and do not constitute a limitation on the technical solutions provided in this application.

The following uses an example in which the sensor is a direct time of flight (direct time of flight, dTOF) sensing module to describe a dTOF ranging process in detail.

FIG. 3 is a schematic diagram of a structure of a dTOF sensing module according to this application. The dTOF sensing module may include a pixel (Pixel) array, a time to digital converter (time to digital convert, TDC) array, and a histogram data storage unit. For example, the pixel array may be a 5 $\times$ 5 array, and the TDC array may also be a 5 $\times$ 5 array. In other words, the 5 $\times$ 5 pixel array one-to-one correspond to the 5 $\times$ 5 TDC array. It should be understood that one TDC may alternatively correspond to a plurality of pixels. In other words, one TDC may alternatively be configured to record a quantity of times that an avalanche signal occurs on the plurality of pixels. Each pixel in the pixel array is configured to sense light and generate an avalanche signal. Each TDC in the TDC array is configured to record, based on occurrence time of the avalanche signal, the quantity of occurrence times in a bin corresponding to the occurrence time, and add 1 to a count in the corresponding bin. The TDC may be further configured to count quantities of times that avalanche signals occur in different bins, to obtain a histogram, and output the histogram to the histogram data storage unit. The histogram data storage unit is configured to store a histogram of each pixel. It may also be understood that the histogram data storage unit stores a plurality of histograms.

With reference to FIG. 3, a dTOF ranging process is as follows: When a photon enters an active area (Active area) of the pixel array, there is a probability that a carrier is generated and avalanche breakdown is triggered, to generate an instantaneous pulse current. After detecting the pulse current, the TDC adds 1 to the count in the corresponding bin based on pulse occurrence time, to complete counting. Avalanche breakdown signals caused by photons that arrive at different moments fall into different bins, and 1 is added to the count in the corresponding bin. Finally, the histogram is obtained through statistics. High-precision depth information can be obtained based on the histogram.

In the dTOF sensing module, a physical storage space that can be used to store histogram data is limited, and a transmission bandwidth of a memory is also limited. If the pixel array included in the dTOF sensing module is 240 x 160, namely, if the resolution is 240 x 160, assuming that an amount of information that needs to be stored for one pixel is BinNum $\times$ BinBit = 256 $\times$ 8, a storage space required by the entire pixel array is 256 $\times$ 8 $\times$ 240 $\times$ 160 = 78.6 Mb. However, when the storage space is large, a requirement on a data transmission bandwidth is high. This is a design bottleneck of a digital circuit part.

In view of this, this application provides a dTOF sensing module. The dTOF sensing module may control a quantity of gated light sensitive units and a quantity of time slice bins allocated to the gated light sensitive units, so that histogram data storage units of a same size can store histogram data corresponding to different quantities of light sensitive units, and the dTOF sensing module is flexibly applicable to different scenarios.

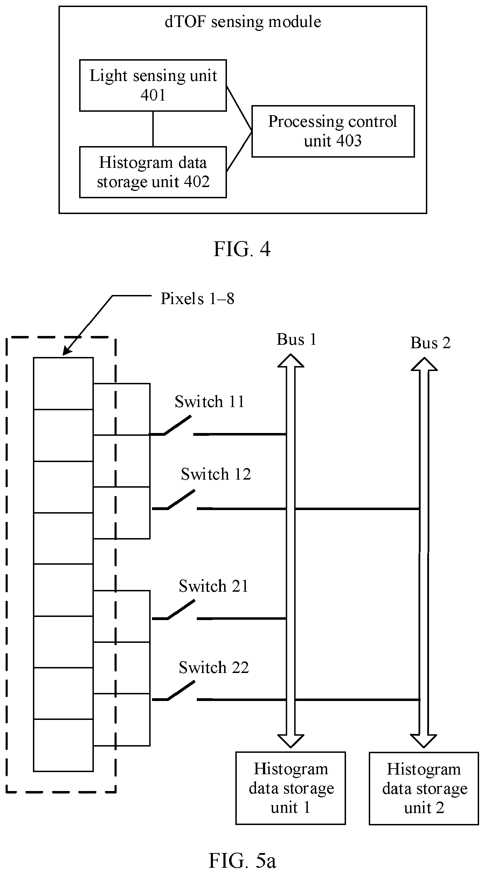

FIG. 4 is a schematic diagram of a structure of a dTOF sensing module according to this application. The sensing module 400 includes W light sensitive units 401, H histogram data storage units 402, and a processing control unit 403, where every K light sensitive units of the W light sensitive units share a first storage space, a size of the first storage space is a size of a storage space corresponding to one histogram data storage unit, K is less than or equal to W, and both W and H are integers greater than or equal to 2. The processing control unit is configured to control gating of N light sensitive units, and allocate Q time slice bins to each gated light sensitive unit, where the N light sensitive units occupy the first storage space, the N light sensitive units are N of the K light sensitive units sharing the first storage space, N is an integer less than or equal to K, and Q is a positive integer. The dTOF sensing module may operate in a first mode or a second mode based on the N gated light sensitive units and the Q time slice bins allocated to each gated light sensitive unit, where a quantity N of gated light sensitive units corresponding to the first mode is greater than a quantity N of gated light sensitive units corresponding to the second mode; and a quantity Q of time slice bins allocated to each light sensitive unit corresponding to the first mode is less than a quantity Q of time slice bins allocated to each light sensitive unit corresponding to the second mode.

It may be understood that, in a possible implementation, there is a correspondence between the time slice bin and Q. When the processing control unit controls the N gated light sensitive units in a fixed period of time, a value of Q may be inversely proportional to duration of the time slice bin. In other words, a larger quantity Q indicates shorter duration of the time slice bin. For example, the processing control unit controls gating of the N light sensitive units in the fixed period of time of 1 second. In a possible implementation, the processing control unit allocates 10 time slice bins to each gated light sensitive unit, and each time slice bin is 0.1 seconds. In another possible implementation, the processing control unit allocates 20 time slice bins to each gated light sensitive unit, and each time slice bin is 0.05 seconds.

It should be noted that, that the K light sensitive units 401 share the first storage space may be understood as that the first storage space may be occupied by a maximum of the K light sensitive units. In other words, the K light sensitive units sharing the first storage space may not be all gated, and the N gated light sensitive units actually occupy the first storage space.

In this application, the processing control unit may be a processor, a field programmable gate array (field programmable gate array, FPGA), a digital signal processing (digital signal processing, DSP) circuit, an application-specific integrated circuit (application specific integrated circuit, ASIC), or another programmable logic device. This is not limited in this application. The processing control unit may control gating of light sensitive units, and allocate a specific quantity of time slice bins to these gated light sensitive units.

Based on the foregoing solution, a quantity of gated light sensitive units and a quantity of time slice bins allocated to each gated light sensitive unit are controlled, so that the dTOF sensing module may operate in different modes, namely, the first mode or the second mode. Further, the quantity of the gated light sensitive units corresponding to the first mode is greater than the quantity of the gated light sensitive units corresponding to the second mode, and a larger quantity of gated light sensitive units indicates a higher resolution. Therefore, when the dTOF sensing module operates in the first mode, the dTOF sensing module may be applied to a scenario requiring a high resolution. When the dTOF sensing module operates in the second mode, the dTOF sensing module may be applied to a scenario requiring a low resolution. The quantity of time slice bins allocated to each light sensitive unit corresponding to the first mode is less than the quantity of time slice bins allocated to each light sensitive unit corresponding to the second mode. Therefore, when the dTOF sensing module operates in the first mode, the dTOF sensing module may be applied to a scenario in which a detection distance is short. When the dTOF sensing module operates in the second mode, the dTOF sensing module may be applied to a scenario in which a detection distance is large. In other words, the quantity of the gated light sensitive units and the quantity of the time slice bins allocated to each gated light sensitive unit are controlled, so that histogram data storage units of a same size may store histogram data corresponding to different quantities of light sensitive units. In other words, the quantity of the gated light sensitive units may be flexibly controlled and the quantity of the time slice bins may be flexibly allocated to the gated light sensitive units without changing the storage space of the histogram data storage units, so that the dTOF sensing module is flexibly applicable to different scenarios. For example, when the dTOF sensing module is used in a scenario with a high resolution and a short detection distance, a large quantity of light sensitive units may be controlled to be gated, and a small quantity of time slice bins are allocated to each light sensitive unit. When the dTOF sensing module is used in a scenario with a low resolution and a large detection distance, a small quantity of light sensitive units may be controlled to be gated, and a large quantity of time slice bins are allocated to each light sensitive unit.

With reference to an application scenario of the dTOF sensing module, a quantity of gated pixels and a quantity of time slice bins allocated to each gated pixel may be flexibly adjusted, to meet requirements of different scenarios. The following shows an example of seven possible application scenarios of the dTOF sensing module.

Scenario 1: Long-distance detection needs to be performed, for example, outdoor navigation, target positioning, and object detection. In long-distance detection, a large quantity of time slice bins need to be allocated to each pixel.

Scenario 2: Short-distance detection needs to be performed, for example, face modeling and small object modeling. In short-distance detection, a small quantity of time slice bins need to be allocated to each pixel.

Scenario 3: A resolution requirement is high, for example, face modeling and small object modeling. When the resolution requirement is high, a large quantity of pixels need to be gated.

Scenario 4: A resolution requirement is low, for example, detection and ranging of a target. When the resolution requirement is low, a small quantity of pixels are gated.

Scenario 5: Long-distance detection needs to be performed, and a resolution requirement is low. In the scenario 5, a small quantity of pixels need to be gated, and a large quantity of time slice bins are allocated to each pixel. It should be understood that long-distance detection usually has a low resolution requirement, low precision, and a high frame rate.

Scenario 6: Short-distance detection needs to be performed, and a resolution requirement is high. In the scenario 6, a large quantity of pixels need to be gated, and a small quantity of time slice bins are allocated to each pixel. It should be understood that short-distance detection usually has a high resolution requirement, high precision, and a low frame rate.

Scenario 7: Long-distance detection needs to be performed, and a resolution requirement is high. In the scenario 7, a large quantity of pixels need to be gated, and a large quantity of time slice bins are allocated to each pixel.

It should be understood that this application is also applicable to implementing different resolutions when a same detection distance exists, or detecting different distances when a same resolution exists.

In a possible implementation, $N = K/m$, where m may be referred to as a gating coefficient. The processing control unit may receive a first instruction from an upper layer (for example, an application layer), and control, based on the first instruction, gating of K/m light sensitive units to share the first storage space. For example, m = 1 indicates that K light sensitive units are gated. In this case, the K gated light sensitive units occupy the first storage space. For another example, m = 2 indicates that K/2 light sensitive units are gated. In this case, the K/2 gated light sensitive units occupy the first storage space. For another example, m = 4 indicates that K/4 light sensitive units are gated. In this case, the K/4 gated light sensitive units occupy the first storage space.

Further optionally, the first instruction may be generated by the upper layer based on a resolution and/or a ranging requirement. For example, if a resolution requirement is high, a value of m may be 1. In other words, all the W light sensitive units are gated. For another example, if a resolution requirement is low, a value of m may be set to a large value, for example, m = 4.

In a possible implementation, the processing control unit may receive a second instruction from the upper layer, and control, based on the second instruction, a quantity Q of time slice bins allocated to each gated light sensitive unit. For example, if a detection distance needs to be large, a value of Q is large. For another example, if a detection distance needs to be short, a value of Q is small.

Further optionally, the second instruction may be generated by the upper layer based on a resolution and/or a detection distance. For example, if a resolution requirement is high and a detection distance needs to be large, a value of m may be set to a small value, and a value of n may be set to a small value. For another example, if a resolution requirement is low, a value of m may be set to a large value, and a value of n is set to a large value. For another example, when values of n are the same, a larger value of m indicates a smaller resolution and a larger detection distance. For details, refer to descriptions of the following specific examples.

In a possible implementation, the W light sensitive units may be a light sensitive unit array.

In the following description, an example in which the light sensitive unit is a pixel is used, and an example of a column of pixels in a pixel array included in the dTOF sensing module is used. The column of pixels correspond to the N histogram data storage units. In other words, the column of pixels may be configured to share the N histogram data storage units. In addition, each pixel may correspond to one switch, where the switch refers to a logical switch. For example, a logical circuit switch in a complementary metal oxide semiconductor (complementary metal-oxide semiconductor, CMOS) may control each pixel to be on or off by using an electrical signal. For ease of description, the following uses an example in which a pixel connected to a bus is represented by a switch. It should be understood that processing logic in an example of a row of the pixel array is the same as processing logic in an example of a column.

The following is an example of a possible connection manner between a pixel and a histogram data storage unit.

In a possible implementation, one column includes N x K pixels, and the N x K pixels may share corresponding N histogram data storage units. In other words, a maximum of K pixels in a column may share the first storage space, and there may be one or more histogram data storage units that provide the first storage space for the K pixels. If a plurality of histogram data storage units provide the shared first storage space for the K pixels, a providing ratio of the plurality of histogram data storage units may be set randomly. Further optionally, each histogram data storage unit corresponds to a group of buses, the N histogram data storage units correspond to N groups of buses, and each pixel may be connected to the histogram data storage unit through the bus.

In a possible implementation, the K pixels may be connected to one histogram data storage unit, or may be connected to a plurality of histograms. For example, whether the pixel is connected to the histogram data storage unit may be controlled by using a switch. For example, one switch may be connected to one histogram data storage unit through a bus, and the K pixels are connected to one switch. When the switch is turned on, the K pixels connected to the switch may be connected to the histogram data storage unit corresponding to the switch through the bus.

It should be noted that K adjacent pixels in a column may be connected to one switch, or K pixels at intervals may be connected to one switch. This is not limited in this application. In addition, the K adjacent pixels may start from the first or the second in the column. This is not limited in this application either.

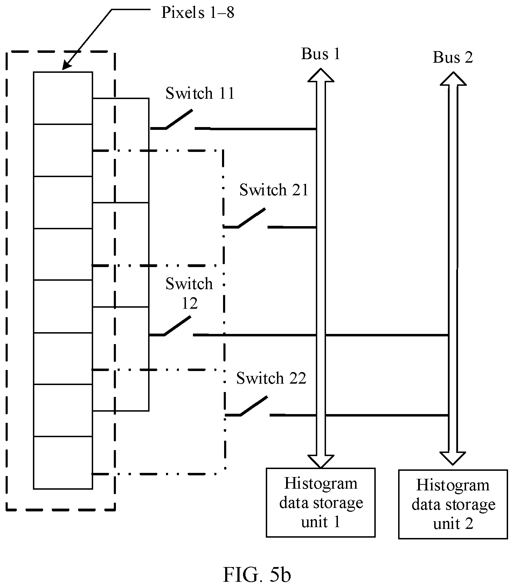

As shown in FIG. 5a and FIG. 5b, for example, N × K = 2 × 4. In other words, a column includes eight pixels (namely, pixels 1-8), and a maximum of four pixels share the first storage space. A histogram data storage unit 1 and/or a histogram data storage unit 2 may provide the first storage space. Each pixel may be connected to two histogram data storage units through a switch and a bus. As shown in FIG. 5a, the first four pixels may be connected to the histogram data storage unit 1 through a switch 11 and a bus 1, and may be connected to the histogram data storage unit 2 through a switch 12 and a bus 2. The last four pixels may be connected to the histogram data storage unit 1 through a switch 21 and a bus 1, and may be connected to the histogram data storage unit 2 through a switch 22 and a bus 2. In other words, the first four pixels may be connected to the switch 11, and may also be connected to the switch 12. The last four pixels may be connected to the switch 21, and may be connected to the switch 22.

As shown in FIG. 5a, if one histogram data storage unit provides the first storage space for the K pixels, the first four pixels connected to the switch 11 may be connected to the histogram data storage unit 1 through the bus 1 by turning on the switch 11. The last four pixels connected to the switch 22 may be connected to the histogram data storage unit 2 through the bus 2 by turning on the switch 22. Alternatively, the first four pixels connected to the switch 12 are connected to the histogram data storage unit 2 through the bus 2 by turning on the switch 12. The last four pixels connected to the switch 21 are connected to the histogram data storage unit 1 through the bus 1 by turning on the switch 21. As shown in FIG. 5b, four pixels connected to the switch 11 at intervals are connected to the histogram data storage unit 1 through the bus 1 by turning on the switch 11. Another four pixels connected to the switch 22 at intervals are connected to the histogram data storage unit 2 through the bus 2 by turning on the switch 22. Alternatively, four pixels connected to the switch 21 at intervals are connected to the histogram data storage unit 1 through the bus 1 by turning on the switch 21. Another four pixels connected to the switch 12 at intervals are connected to the histogram data storage unit 2 through the bus 2 by turning on the switch 12.

As shown in FIG. 5a, if two histogram data storage units provide the first storage space for the K pixels, the first four pixels connected to the switch 11 may be connected to the histogram data storage unit 1 through the bus 1 and the four pixels are connected to the histogram data storage unit 2 through the bus 2 by turning on the switch 11 and the switch 12. The last four pixels connected to the switch 21 are connected to the histogram data storage unit 1 through the bus 1 and the last four pixels connected to the switch 22 are connected to the histogram data storage unit 2 through the bus 2 by turning on the switch 21 and the switch 22.

It should be understood that, if the pixel array included in the dTOF sensing module is M x (N x K), the dTOF sensing module includes at least M x N histogram data storage units.

The following uses an example to describe a relationship between a quantity of gated pixels (N = K/m) and the first storage space when the gating coefficient m is set to different values.

In this application, a maximum of K pixels share the first storage space. In actual use, the K pixels sharing the first storage space may not be all gated, and actually the K/m gated pixels occupy the first storage space. Although a pixel that is not gated is connected to a corresponding histogram data storage unit, the pixel does not occupy a storage space provided by the histogram data storage unit. It should be understood that a quantity of pixels gated each time is an integer. In other words, K/m is an integer.

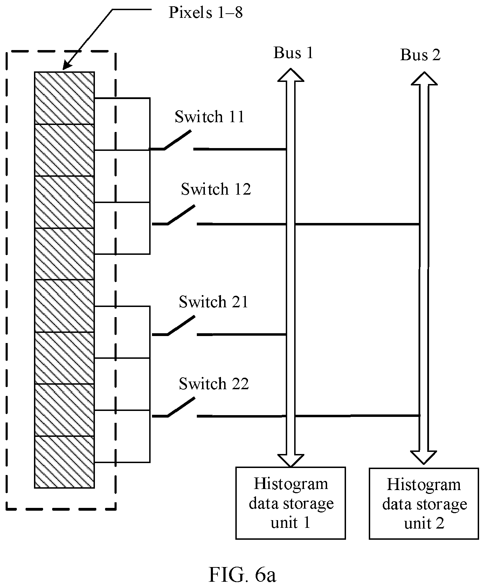

When the gating coefficient m = 1, K/m = K pixels are gated. As shown in FIG. 5a, all four pixels sharing the first storage space are gated. In this case, the four gated pixels occupy the first storage space. As shown in FIG. 6a, all eight pixels in a column are gated. It should be noted that, when the gating coefficient m = 1, the dTOF sensing module may be applied to the foregoing scenario 3 or scenario 6.

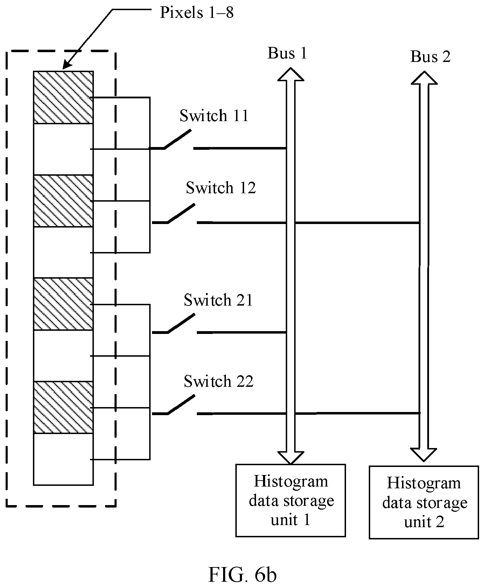

When the gating coefficient m = 2, K/2 pixels are gated. As shown in FIG. 5a, K/2 = 4/2 = 2 pixels in four pixels sharing the first storage space are gated. In this case, the two gated pixels occupy the first storage space. As shown in FIG. 6b, for a column, two of the four pixels connected to one switch are gated.

It should be noted that, the K/2 pixels may be gated at an interval of one pixel (as shown in FIG. 6b), or the first K/2 pixels may be gated, or the last K/2 pixels may be gated, or K/2 pixels in the K pixels may be randomly gated. This is not limited in this application.

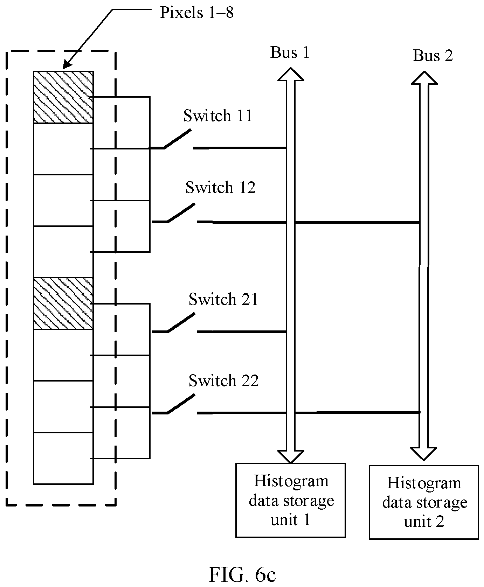

When the gating coefficient m = 4, K/4 pixels are gated. As shown in FIG. 5a, K/4 = 4/4 = 1 pixel in four pixels sharing the first storage space is gated. In this case, the gated pixel occupies the first storage space. As shown in FIG. 6c, for a column, one of the four pixels connected to one switch is gated. It should be noted that, when the gating coefficient m = 4, the dTOF sensing module may be applied to the foregoing scenario 4 or scenario 5.

It should be noted that, the K/4 pixels may alternatively be gated at an interval of three pixels (as shown in FIG. 6c), or the first K/4 pixels may be gated, or the last K/4 pixels may be gated, or K/4 pixels in the K pixels may be randomly gated. This is not limited in this application.

Based on the foregoing gated pixels, the following describes in detail a possible implementation of allocating a quantity Q of time slice bins (which may be referred to as PixelBin) to each gated pixel.

In a possible implementation, the first storage space includes M storage blocks, and a quantity F of time slice bins can be stored in each storage block, where M = K/n, N = K/m, $Q = M \times \frac{1}{N} \times F = M \times (m/K) \times F = (K/n) \times (m/K)$ $\times F = m/n \times F$, n may be referred to as an occupation coefficient, and F is BinNum. A maximum of K pixels share the first storage space, and the K/m gated pixels occupy the first storage space. In this case, n/m pixels occupy one storage block. In other words, each pixel may occupy m/n storage blocks.

Further optionally, one BinNum is configured for one storage block. In other words, a quantity of time slice bins that can be stored in one storage block is a maximum quantity of time slice bins corresponding to the storage block. PixelBin = BinNum × (m/n) may be allocated to each gated pixel, and PixelBin allocated to each gated pixel may be controlled by adjusting n. (For PixelBin, refer to the descriptions of the foregoing term 7, and details are not described herein again.) A distance that can be detected by each gated pixel is a maximum distance that can be detected by the pixel. In other words, a limit value of the distance that can be detected is referred to as a first distance. The first distance is C/2 × PixelBin × LSB = C/2 × Q × T, where LSB represents a period of each bin, C is a speed of light, and Q is a quantity of time slice bins allocated to the gated pixel. It should be understood that, when m is fixed, a smaller value of n indicates a larger Q allocated to each pixel, and a larger detection distance of each gated pixel.

When the gating coefficient m = 1, all the K pixels sharing the first storage space are gated. In other words, the gated K pixels occupy the first storage space, n pixels occupy one storage block, and each pixel occupies 1/n storage block. PixelBin = BinNum × (1/n) that can be allocated to each gated pixel may be determined. In other words, a maximum distance = C/2 × PixelBin × LSB = C/2 × BinNum × (1/n) × LSB that can be detected by each gated pixel may be determined.

When the gating coefficient m = 2, K/2 pixels in the K pixels sharing the first storage space are gated. In other words, the K/2 gated pixels occupy the first storage space, n/2 pixels occupy one storage block, and each pixel occupies 2/n storage block. Further, PixelBin = BinNum × (2/n) can be allocated to each gated pixel. In other words, a maximum distance = C/2 × PixelBin × LSB = C/2 × BinNum × (2/n) × LSB can be detected by each gated pixel.

When the gating coefficient m = 4, K/4 pixels in the K pixels sharing the first storage space are gated. In other words, the K/4 gated pixels occupy the first storage space, n/4 pixels occupy one storage block, and each pixel occupies 4/n storage block. Further optionally, PixelBin = BinNum × (4/n) can be allocated to each gated pixel. A maximum distance = C/2 × PixelBin × LSB = C/2 × BinNum × (4/n) × LSB can be detected by each gated pixel.

As shown in Table 1, this application shows an example of a relationship between a quantity of gated pixels and a storage block occupied by each pixel when m is set to different values.

| Value of m | Quantity of gated pixels | Size of a storage block occupied by each pixel |
| --- | --- | --- |
| 1 | K | m/n = 1/n |
| 2 | K/2 | m/n = 2/n |
| 4 | K/4 | m/n = 4/n |

To make full use of the histogram data storage unit, a value of n may be an integer multiple of m and a common divisor of K, and n ≤ K.

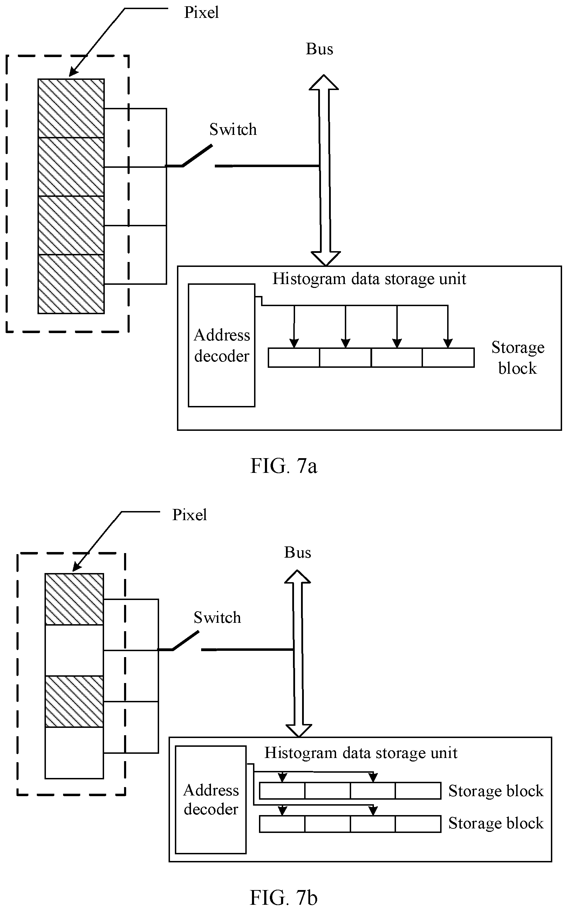

When m = 1, FIG. 7a is a schematic diagram of a relationship between pixels and storage blocks occupied by pixels according to this application. FIG. 7a uses an example in which the first storage space is provided by a histogram data storage unit. In this example, the storage block may be further divided. In other words, the storage block is divided into four storage subblocks. One gated pixel occupies m/n storage block. When n = 4, one gated pixel occupies 1/4 the storage block. In other words, one gated pixel occupies one storage subblock. The four gated pixels may be each connected to one storage subblock by using an address decoder.

When m = 2, FIG. 7b is a schematic diagram of a relationship between pixels and storage blocks occupied by pixels according to this application. FIG. 7b uses an example in which the first storage space is provided by a histogram data storage unit. When n = 4, one gated pixel occupies m/n = 2/4 = 1/2 storage block. In other words, one gated pixel occupies two storage subblocks, and each gated pixel may be connected to the two storage subblocks by using an address decoder. For example, the address decoder may connect a first storage subblock and a third storage subblock of a storage block 1 to one gated pixel, and connect a first storage subblock and a third storage subblock of a storage block 2 to another gated pixel. Certainly, the address decoder may alternatively connect a second storage subblock and a fourth storage subblock of a storage block 1 to one pixel, and connect a second storage subblock and a fourth storage subblock of a storage block 2 to another gated pixel; or the address decoder may connect a first storage subblock and a second storage subblock of a storage block 1 to one gated pixel, and connect a third storage subblock and a fourth storage subblock of a storage block 1 to another gated pixel; or the address decoder may connect any one of a first storage subblock of a storage block 1 and four storage subblocks of a storage block 2 to one gated pixel, and connect any one of a second storage subblock of a storage block 1 and four storage subblocks of a storage block 2 to another gated pixel.

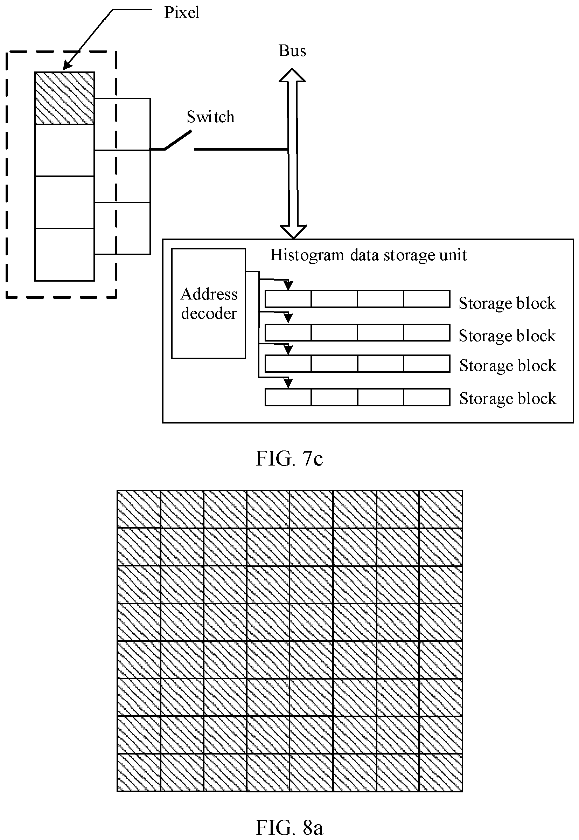

When m = 4, FIG. 7c is a schematic diagram of a relationship between pixels and storage blocks occupied by pixels according to this application. FIG. 7c uses an example in which the first storage space is provided by a histogram data storage unit. One gated pixel occupies m/n storage block. When n = 4, one gated pixel occupies m/n = 4/4 = 1 storage block. In other words, one gated pixel occupies one storage block. The gated pixel may be separately connected to four storage subblocks of one storage block by using an address decoder; or the gated pixel may be separately connected to four storage subblocks of four storage blocks by using an address decoder; or the gated pixel may be separately connected to two storage subblocks in each of the two storage blocks by using an address decoder.

It should be noted that the foregoing describes an example in which values of n are the same. In different application scenarios, values of n may alternatively be different. This is not limited in this application. In addition, when m is fixed, a smaller value of n indicates a larger detection distance of each gated pixel.

Based on the gating coefficient m and the occupation coefficient n, for example, if LSB = 300 ps and BinNum = 256, Table 2 shows an example of a maximum distance that can be detected by each pixel and a corresponding resolution when m = 1, 2, or 4 and n = 4.

| Value of m | Maximum distance detected by each pixel | Resolution |
|---|---|---|
| 1 | C/2 x PixelBin x LSB = C/2 x LSB x 64 = 288 cm | 320 x 240 |
| 2 | C/2 x PixelBin x LSB = C/2 x LSB x 128 = 576 cm | 160 x 120 |
| 4 | C/2 x PixelBin x LSB = C/2 x LSB x 256 = 1152 cm | 80 x 60 |

Based on the foregoing content, it may be learned that m and n are controlled, so that histogram data storage units of the same size may store histograms corresponding to different quantities of pixels. When a quantity of gated pixels is small, the maximum distance detected by each pixel is large, and the sensing module is applicable to long-distance detection. When a quantity of gated pixels is large, the maximum distance detected by each pixel is small, and the sensing module is applicable to short-distance detection. Further, a larger quantity of gated pixels indicates a higher resolution. For example, if a quantity of gated pixels is 320 x 240, the resolution is 320 x 240. For another example, if a quantity of gated pixels is 160 x 120, the resolution is 160 x 120. For another example, if a quantity of gated pixels is 80 x 60, the resolution is 80 x 60. In other words, when a quantity of gated pixels is small, the sensing module is applicable to a scenario in which a ranging range is large but a resolution requirement is low. When a quantity of gated pixels is large, the sensing module is applicable to a scenario in which a ranging range is small but a resolution requirement is high.

The following example shows three pixel gating manners.

Manner 1: Each pixel has row enable (X_Enable) control and column enable (Y_Enable) control, and is simultaneously controlled through row enable and column enable, the pixel is gated, and the gated pixel is in an operating state.

It may also be understood that the processing control unit may control row enable and column enable of each pixel by using an electrical signal. For example, when an electrical signal of a high level (for example, 1) is input to both a row and a column of a pixel, the pixel may be gated. When there is a low level (for example, 0) in an electrical signal for communication in the row and the column of the pixel, the pixel is not gated.

Manner 2: Each pixel has row enable (X_Enable) control, the pixel may be gated when row enable is controlled, and the gated pixel is in an operating state.

It may also be understood that the processing control unit may control row enable of each pixel by using an electrical signal.

Manner 3: Each pixel has column enable (Y_Enable) control, the pixel may be gated when column enable is controlled, and the gated pixel is in an operating state.

It may also be understood that the processing control unit may control column enable of each pixel by using an electrical signal.

With reference to the foregoing three pixel gating manners, the following describes how to gate pixels in a pixel array by using an example in which the pixel array included in the dTOF sensing module includes eight rows and eight columns.

Based on the foregoing manner 1, each pixel is jointly controlled through row enable and column enable.

With reference to the gating manner in FIG. 6a, FIG. 8a shows an example of a schematic diagram of a pixel array. All pixels in the pixel array are gated. Based on the gated pixel array, a resolution may be 8 x 8 (a horizontal resolution is increased by 40 times and a vertical resolution is increased by 30 times, to implement a resolution of 320 x 240).

It should be noted that all pixels in the pixel array are gated at a time, and all the pixels simultaneously operate. This manner may also be referred to as a surface scanning manner. The surface scanning manner may be used to reconstruct an object or a scene, and has a high requirement on integrity of the object or the scene.

All the pixels in the pixel array are gated at a time, so that full FOV coverage can be implemented without a loss of a frame rate. In other words, a frame of image with a full FOV can be obtained through once scanning. All the pixels in the pixel array are gated, to implement a high resolution.

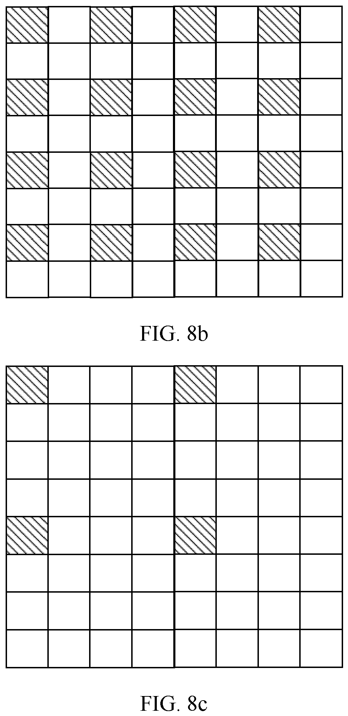

With reference to the gating manner in FIG. 6b, FIG. 8b shows an example of a schematic diagram of another pixel array. K/2 pixels are gated in a column of the pixel array. For the gated pixels, refer to the shadow part in FIG. 8b. Based on the gated pixel array, a resolution may be 4 x 4 (a horizontal resolution is increased by 40 times and a vertical resolution is increased by 30 times, to implement a resolution of 160 x 120).

With reference to the gating manner in FIG. 6c, FIG. 8c shows an example of a schematic diagram of another pixel array. K/4 pixels are gated in a column of the pixel array. For the gated pixels, refer to the shadow part in FIG. 8b. Based on the gated pixel array, a resolution may be 2 x 2 (a horizontal resolution is increased by 40 times and a vertical resolution is increased by 30 times, to implement a resolution of 80 x 60).

It should be understood that each pixel in the pixel array may be gated through simultaneous control of row enable and column enable. Therefore, K/m pixels in a column are gated. When m = 2, K/m pixels in a column are gated at an interval of one column. When m = 4, K/m pixels in a column are gated at an interval of three columns.

Based on the foregoing manner 2, that each pixel has row enable (X Enable) control may be understood as that each pixel may be independently controlled through row enable.

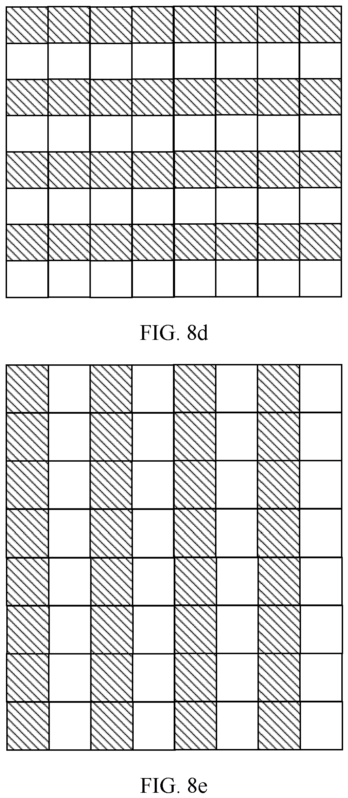

With reference to the gating manner in FIG. 6b, FIG. 8d shows an example of a schematic diagram of another pixel array. K/2 pixels are gated in a column of the pixel array. For the gated pixels, refer to the shadow part in FIG. 8d. Based on the gated pixel array, a resolution may be 8 x 4 (a horizontal resolution is increased by 40 times and a vertical resolution is increased by 30 times, to implement a resolution of 320 x 120).

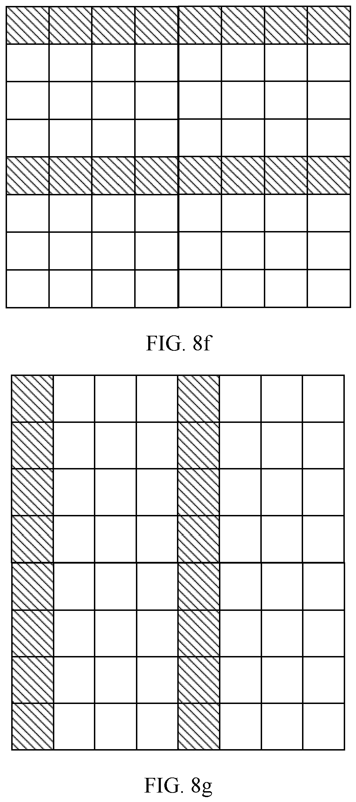

With reference to the gating manner in FIG. 6c, FIG. 8f shows an example of a schematic diagram of another pixel array. K/4 pixels are gated in a column of the pixel array. For the gated pixels, refer to the shadow part in FIG. 8f. Based on the gated pixel array, a resolution may be 8 x 2 (a horizontal resolution is increased by 40 times and a vertical resolution is increased by 30 times, to implement a resolution of 320 x 60).

Based on the foregoing manner 3, that each pixel has column enable (X Enable) control may be understood as that each pixel may be independently controlled through column enable.

With reference to the gating manner in FIG. 6b, FIG. 8e shows an example of a schematic diagram of another pixel array. K/2 pixels are gated in a column of the pixel array. For the gated pixels, refer to the shadow part in FIG. 8e. Based on the gated pixel array, a resolution may be 4 x 8 (a horizontal resolution is increased by 40 times and a vertical resolution is increased by 30 times, to implement a resolution of 160 x 240).

With reference to the gating manner in FIG. 6c, FIG. 8g shows an example of a schematic diagram of another pixel array. K/4 pixels are gated in a column of the pixel array. For the gated pixels, refer to the shadow part in FIG. 8g. Based on the gated pixel array, a resolution may be 2 x 8 (a horizontal resolution is increased by 40 times and a vertical resolution is increased by 30 times, to implement a resolution of 80 x 240).

When a pixel is switched through row enable control or column enable control, a strip scanning mode may be implemented. The strip scanning mode may be used to detect a target, for example, detect whether a target exists in an area, and has a low requirement on target integrity.

In this application, in a scenario in which m is greater than 1 (in other words, N is less than K), the dTOF sensing module may implement long-distance detection, but a low resolution. To implement a high-resolution depth, all pixels may be gated in a time-division manner.

In a possible implementation, all the W light sensitive units may be gated in L times, and L is determined based on K and N (N = K/m). Further optionally, L is further related to a gating manner of each pixel.

With reference to the foregoing three pixel gating manners, the following example shows that all pixels are gated in a time-division manner, to implement full resolution coverage.

Based on the foregoing manner 1, a pixel may be gated through simultaneous control of row enable and column enable.

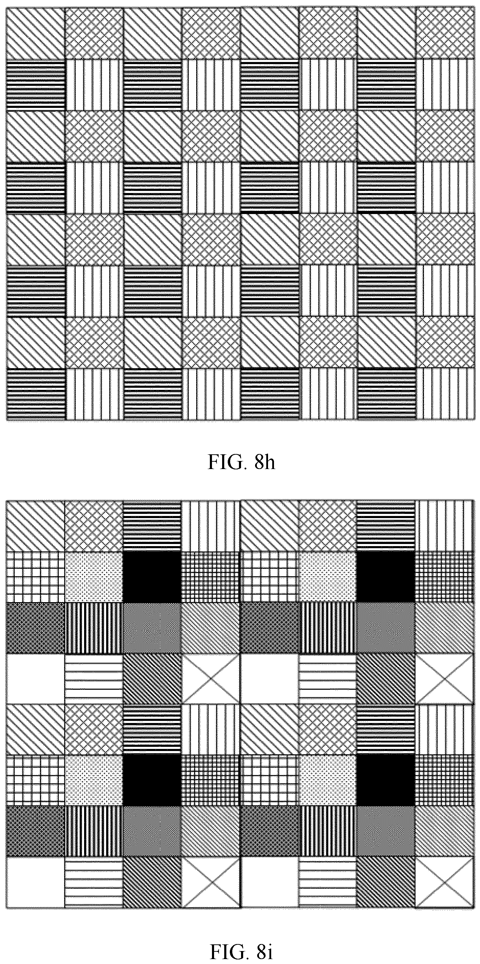

As shown in FIG. 8b, when m = 2, 1/4 pixels are gated each time through time-division control, a 1/4 resolution may be covered, and all the pixels in the pixel array are gated in 4 times, to implement full resolution coverage. As shown in FIG. 8h, same padding indicates same gating.

It should be understood that, if a frame rate in once gating of all pixels is set to 16x, a frame rate in Example 1 is 4x.

As shown in FIG. 8c, when m = 4, 1/16 pixels are gated each time through time-division control, a 1/16 resolution may be covered, and all the pixels in the pixel array are gated in 16 times, to implement full resolution coverage. As shown in FIG. 8i, same padding indicates same gating.

It should be understood that, if a frame rate in once gating of all pixels is set to 16x, a frame rate in Example 2 is x.

Based on the foregoing manner 2 or manner 3, the pixel may be gated through control of either row enable or column enable.

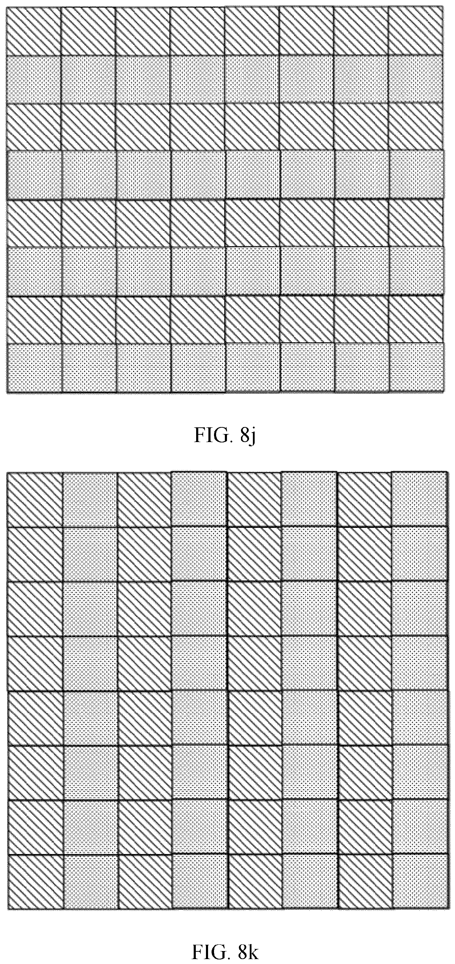

As shown in FIG. 8d or FIG. 8e, when m = 2, 1/2 pixels are gated each time through time-division control, a 1/2 resolution may be covered each time, and all the pixels in the pixel array are gated in 2 times, to implement full resolution coverage. As shown in FIG. 8j or FIG. 8k, same padding indicates same gating.

It should be understood that, if a frame rate in once gating of all pixels is set to 16x, a frame rate in Example 1 is 2x.

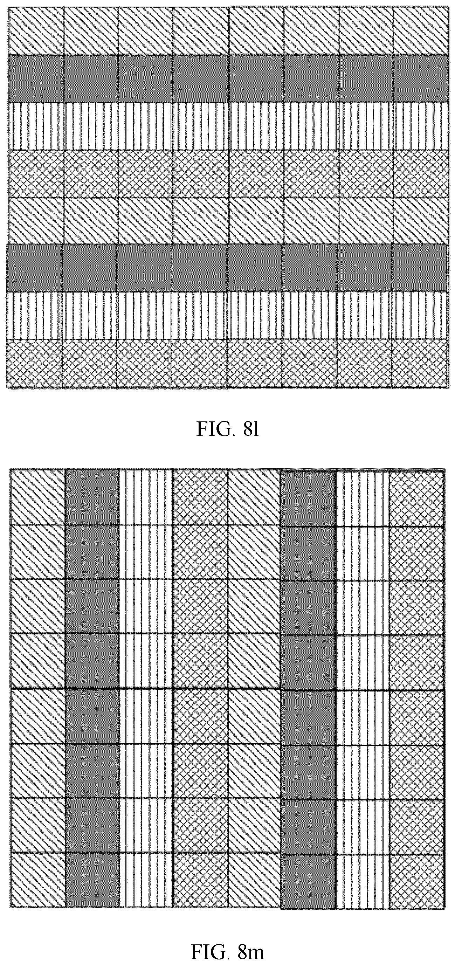

As shown in FIG. 8f or FIG. 8g, when m=4, 1/4 pixels are gated each time through time-division control, a 1/4 resolution may be covered each time, and all the pixels are gated in 4 times, to implement full resolution coverage. As shown in FIG. 8l or FIG. 8m, same padding indicates same gating.

It should be noted that, generally light sources in a light source array one-to-one correspond to pixels in a pixel array. In other words, one pixel corresponds to one light source. If 1/2 pixels are gated each time, corresponding 1/2 light sources may be turned on (or referred to as lighted, gated, or powered on). If 1/4 pixels are gated each time, corresponding 1/4 light sources may be turned on. If 1/16 pixels are gated each time, corresponding 1/16 light sources may be turned on.

In a possible implementation, the light source in the light source array may be a vertical cavity surface emitting laser (vertical cavity surface emitting laser, VCSEL) or an edge emitting laser (edge emitting laser, EEL). The EEL light source may implement independent addressing. The independent addressing indicates independent gating.

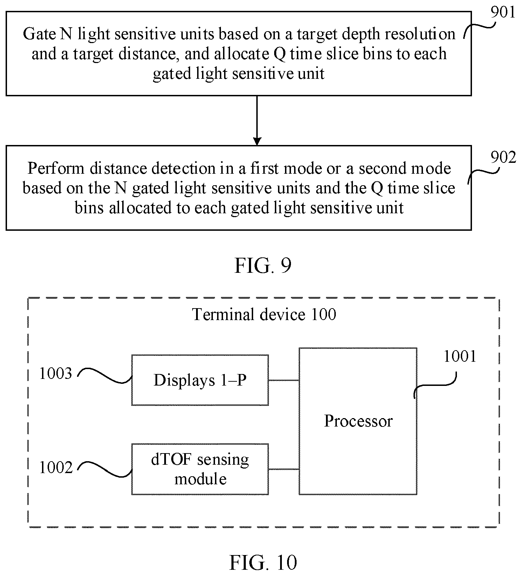

Based on the foregoing content and a same concept, this application provides a ranging method. Refer to the descriptions in FIG. 9. The ranging method may be applied to the dTOF sensing module shown in any one of the embodiments in FIG. 2 to FIG. 8m. The dTOF sensing module includes W light sensitive units, H histogram data storage units, and a processing control unit, where K light sensitive units of the W light sensitive units share a first storage space, a size of the first storage space is a size of a storage space corresponding to one histogram data storage unit, K is less than or equal to W, and both W and H are integers greater than or equal to 2.

As shown in FIG. 9, the ranging method includes the following steps.

Step 901: Control gating of N light sensitive units based on a target resolution and a target distance, and allocate Q time slice bins to each gated light sensitive unit.

The gated N light sensitive units occupy the first storage space. The N light sensitive units are N of the K light sensitive units sharing the first storage space, where N is an integer less than or equal to K, and Q is a positive integer.

In a possible implementation, a maximum of K light sensitive units occupy the first storage space. In other words, in actual use, the K light sensitive units sharing the first storage space may not be all gated. Actually, the N gated light sensitive units occupy the first storage space, and the light sensitive units that are not gated do not occupy the first storage space. It should be understood that a quantity of light sensitive units gated each time is an integer. In other words, N is an integer.

Further optionally, a first instruction may be generated based on the target resolution and/or the target distance, and the first instruction indicates gating of the N light sensitive units. Further, a second instruction may be generated based on the target resolution and the target distance, and the second instruction indicates a quantity of time slice bins allocated to each gated light sensitive unit. It should be understood that the target resolution may be a required resolution, and the target distance may be a required detection distance.

For example, when the required resolution (namely, the target resolution) is high and the required detection distance (namely, the target distance) is small, the dTOF sensing module may control gating of a large quantity of light sensitive units, and allocate a small quantity of time slice bins to each light sensitive unit; or when the required resolution (namely, the target resolution) is low and the required detection distance (namely, the target distance) is large, the dTOF sensing module may control gating of a small quantity of light sensitive units, and allocate a large quantity of time slice bins to each light sensitive unit.

As shown in Table 2, if the required resolution is 320 x 240 and the detection distance is 288 m, the target resolution is high and the detection distance is small; or if the resolution is 80 x 60 and the detection distance is 1152 m, the target resolution is low and the detection distance is large.

In this case, the first storage space includes M storage blocks. The method may determine a first quantity of storage blocks occupied by each gated light sensitive unit; and allocate the Q time slice bins to each gated light sensitive unit based on a quantity of time slice bins that can be stored in the storage blocks and the first quantity.

The foregoing step 901 may be performed by the processing control unit. For a specific process, refer to the foregoing related descriptions. Details are not described herein again.

Step 902: Perform distance detection in a first mode or a second mode based on the N gated light sensitive units and the Q time slice bins allocated to each gated light sensitive unit.

In this case, a quantity N of gated light sensitive units corresponding to the first mode is greater than a quantity N of gated light sensitive units corresponding to the second mode; or a quantity Q of time slice bins allocated to each light sensitive unit corresponding to the first mode is less than a quantity Q of time slice bins allocated to each light sensitive unit corresponding to the second mode. Alternatively, a quantity N of gated light sensitive units corresponding to the first mode is greater than a quantity N of gated light sensitive units corresponding to the second mode; and a quantity Q of time slice bins allocated to each light sensitive unit corresponding to the first mode is less than a quantity Q of time slice bins allocated to each light sensitive unit corresponding to the second mode.

It may be learned from the foregoing step 901 and step 902 that, gating of the N light sensitive units may be controlled based on the target resolution and the target distance, and the Q time slice bins are allocated to each gated light sensitive unit. Histogram data storage units of a same size may be configured to store histogram data corresponding to different quantities of light sensitive units, so that the dTOF sensing module operates in the first mode or the second mode, to be flexibly applicable to different scenarios. For example, when the dTOF sensing module is used in a scenario with a high resolution and a short detection distance, a large quantity of light sensitive units may be controlled to be gated, and a small quantity of time slice bins are allocated to each light sensitive unit. When the dTOF sensing module is used in a scenario with a low resolution and a large detection distance, a small quantity of light sensitive units may be controlled to be gated, and a large quantity of time slice bins are allocated to each light sensitive unit.

Based on the foregoing described structure and function principles of the dTOF sensing module, this application further provides a terminal device. The terminal device may include the foregoing dTOF sensing module and a processor. The processor is configured to process imaging information obtained by the dTOF sensing module. Certainly, the terminal device may further include other components, for example, a memory, a wireless communication apparatus, a sensor, a touchscreen, and a display.

In this application, the terminal device may be a mobile phone, a tablet computer, a wearable device (for example, a smartwatch), or the like. An example embodiment of the terminal device includes but is not limited to a terminal device in which IOS®, Android®, Microsoft®, or another operating system is installed.

FIG. 10 is a schematic diagram of a structure of a terminal device according to an embodiment of this application. The terminal device 100 may include a processor 1001, a dTOF sensing module 1002, a display 1003, and the like. It should be understood that the hardware structure shown in FIG. 10 is merely an example. The terminal device to which this application is applicable may have more or fewer components than the terminal device 100 shown in FIG. 10, may combine two or more components, or may have different component configurations. Components shown in the figure may be implemented in hardware including one or more signal processing and/or application-specific integrated circuits, software, or a combination of hardware and software.

The processor 1001 may include one or more processing units. For example, the processor 1001 may include an application processor (application processor, AP), a graphics processing unit (graphics processing unit, GPU), an image signal processor (image signal processor, ISP), a controller, and a digital signal processor (digital signal processor, DSP). Different processing units may be independent components, or may be integrated into one or more processors.

For the dTOF sensing module 1002, refer to the foregoing descriptions. Details are not described herein again.

The display 1003 may be configured to display an image and the like. The display 1003 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the terminal device 100 may include one or P displays 1003, where P is a positive integer greater than 1.

Further optionally, a plurality of applications may be installed in the terminal device, and the applications may be used in different scenarios. For an applicable scenario, refer to the descriptions of the foregoing seven possible scenarios. Details are not described herein again.

The following uses a first application as an example. After the first application is started in response to a user operation, the first application may send a detection scenario related parameter (for example, a target resolution and a target distance) to an intermediate layer or a control layer. The intermediate layer or the control layer may generate a first instruction and a second instruction based on the detection scenario related parameter, and separately send the first instruction and the second instruction to the dTOF sensing module 1002. The dTOF sensing module 1002 gates N pixels according to the received first instruction, and allocate Q time slice bins to each of the N gated pixels based on the second instruction.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "and/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between associated objects. It may be understood that, in this application, "uniformity" does not mean absolute uniformity, and an engineering error may be allowed.

It may be understood that various numbers in the embodiments of this application are merely used for differentiation for ease of description, and are not used to limit the scope of the embodiments of this application. The sequence numbers of the foregoing processes do not mean execution sequences, and the execution sequences of the processes should be determined based on functions and internal logic of the processes. The terms "first", "second", and the like are used to distinguish between similar objects, and do not need to be used to describe a specific order or sequence.

In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to them without departing from the spirit and scope of this application. Correspondingly, the specification and accompanying drawings are merely examples for description of the solutions defined by the appended claims, and are considered as any of or all modifications, variations, combinations or equivalents that cover the scope of this application.

It is clear that a person skilled in the art can make various modifications and variations to this application without departing from the spirit and the scope of the present invention. This application is intended to cover these modifications and variations provided that they fall within the scope of protection defined by the following claims and their equivalent technologies.

**Claims**

1. A direct time of flight dTOF sensing module, comprising W light sensitive units, H histogram data storage units, and a processing control unit, wherein every K light sensitive units of the W light sensitive units share a first storage space, a size of the first storage space is a size of a storage space corresponding to one histogram data storage unit, K is less than or equal to W, and both W and H are integers greater than or equal to 2;

    the processing control unit is configured to control gating of N light sensitive units, wherein the N light sensitive units occupy the first storage space, the N light sensitive units are N of the K light sensitive units sharing the first storage space, and N is an integer less than or equal to K;
    the processing control unit is further configured to allocate Q time slice bins to each gated light sensitive unit, wherein Q is a positive integer; and
    the N gated light sensitive units and the Q time slice bins allocated to each gated light sensitive unit are used for the dTOF sensing module to operate in a first mode or a second mode, wherein a quantity N of gated light sensitive units corresponding to the first mode is greater than a quantity N of gated light sensitive units corresponding to the second mode; and/or a quantity Q of time slice bins allocated to each light sensitive unit corresponding to the first mode is less than a quantity Q of time slice bins allocated to each light sensitive unit corresponding to the second mode.

2. The sensing module according to claim 1, wherein the first storage space comprises M storage blocks, and M is a positive integer;
    the processing control unit is specifically configured to:

    determine a first quantity of storage blocks occupied by each gated light sensitive unit; and
    allocate the Q time slice bins to each gated light sensitive unit based on a quantity of time slice bins that can be stored in the storage blocks and the first quantity.

3. The sensing module according to claim 2, wherein the first quantity is $M \times \frac{1}{N}$, and $Q = M \times \frac{1}{N} \times F$, wherein F represents the quantity of the time slice bins that can be stored in the storage blocks.

4. The sensing module according to claim 2 or 3, wherein the storage block is configured to store data generated when at least one light sensitive unit detects a first distance, and the first distance is a distance that can be detected by the light sensitive unit.

5. The sensing module according to claim 4, wherein the first distance is $C/2 \times T \times Q$, C is a speed of light, and T is a period of the time slice bin.

6. The sensing module according to any one of claims 1 to 5, wherein the first storage space is provided by one of the H histogram data storage units; or
    the first storage space is provided by at least two of the H histogram data storage units.

7. The sensing module according to any one of claims 1 to 6, wherein the W light sensitive units are a light sensitive unit array; and
    the K light sensitive units are K adjacent light sensitive units in a column of the light sensitive unit array, or K adjacent light sensitive units in a row of the light sensitive unit array.

8. The sensing module according to any one of claims 1 to 7, wherein when N is less than K, the W light sensitive units are gated in L times, and L is determined based on K and N.

9. The sensing module according to any one of claims 1 to 8, wherein a manner of controlling gating of each of the N light sensitive units comprises any one of the following:

    row enable control and column enable control;
    row enable control; or
    column enable control.

10. The sensing module according to any one of claims 1 to 9, wherein the processing control unit is specifically configured to:

receive a first instruction, and control gating of the N light sensitive units based on the first instruction, wherein the first instruction is determined based on a target resolution; and

receive a second instruction, and allocate the Q time slice bins to each gated light sensitive unit based on the second instruction, wherein the second instruction is determined based on the target resolution and a target distance.

11. A terminal device, comprising a processor and the direct time of flight dTOF sensing module according to any one of claims 1 to 10, wherein the processor is configured to process information obtained when the dTOF sensing module operates in a first mode or a second mode.

12. A ranging method, applied to a direct time of flight dTOF sensing module, wherein the dTOF sensing module comprises W light sensitive units, H histogram data storage units, and a processing control unit, K light sensitive units of the W light sensitive units share a first storage space, a size of the first storage space is a size of a storage space corresponding to one histogram data storage unit, K is less than or equal to W, and both W and H are integers greater than or equal to 2; and

the method comprises:

controlling gating of N light sensitive units based on a target resolution and a target distance, and allocating Q time slice bins to each gated light sensitive unit, wherein the N light sensitive units occupy the first storage space, the N light sensitive units are N of the K light sensitive units sharing the first storage space, N is an integer less than or equal to K, and Q is a positive integer; and

performing distance detection in a first mode or a second mode based on the N gated light sensitive units and the Q time slice bins allocated to each gated light sensitive unit, wherein a quantity N of gated light sensitive units corresponding to the first mode is greater than a quantity N of gated light sensitive units corresponding to the second mode; and a quantity Q of time slice bins allocated to each light sensitive unit corresponding to the first mode is less than a quantity Q of time slice bins allocated to each light sensitive unit corresponding to the second mode.

13. The method according to claim 12, wherein the first storage space comprises M storage blocks, and M is a positive integer; and

the allocating Q time slice bins to each gated light sensitive unit comprises:

determining a first quantity of storage blocks occupied by each gated light sensitive unit; and
allocating the Q time slice bins to each gated light sensitive unit based on a quantity of time slice bins that can be stored in the storage blocks and the first quantity.

14. The method according to claim 13, wherein the first quantity is $M \times \frac{1}{N}$, and $Q = M \times \frac{1}{N} \times F$, wherein F represents the quantity of the time slice bins that can be stored in the storage blocks.

15. The method according to claim 13 or 14, wherein the storage block is configured to store data generated when at least one light sensitive unit detects a first distance, and the first distance is a distance that can be detected by the light sensitive unit.

16. The method according to claim 15, wherein the first distance is $C/2 \times T \times Q$, C is a speed of light, and T is a period of the time slice bin.

17. The method according to any one of claims 12 to 16, wherein the first storage space is provided by one of the H histogram data storage units; or
the first storage space is provided by at least two of the H histogram data storage units.

18. The method according to any one of claims 12 to 17, wherein the W light sensitive units are a light sensitive unit array; and
the K light sensitive units are K adjacent light sensitive units in a column of the light sensitive unit array, or K adjacent light sensitive units in a row of the light sensitive unit array.

19. The method according to any one of claims 12 to 18, wherein when N is less than K, the W light sensitive units are gated in L times, and L is determined based on K and N.

**20.** The method according to any one of claims 12 to 19, wherein a manner of controlling gating of each of the N light sensitive units comprises any one of the following:

row enable control and column enable control;
row enable control; or
column enable control.

**21.** The method according to any one of claims 12 to 20, wherein the controlling gating of N light sensitive units based on a target resolution and a target distance comprises:

receiving a first instruction, and controlling gating of the N light sensitive units based on the first instruction, wherein the first instruction is determined based on the target resolution; and
receiving a second instruction, and allocating the Q time slice bins to each gated light sensitive unit based on the second instruction, wherein the second instruction is determined based on the target resolution and the target distance.

**22.** A terminal device, comprising the direct time of flight dTOF sensing module according to any one of claims 1 to 10, a memory, and a processor;

the memory is configured to store a program or instructions; and
the processor is configured to invoke the program or the instructions to control the dTOF sensing module to perform the method according to any one of claims 12 to 21.

**23.** A computer-readable storage medium, wherein the computer-readable storage medium stores a computer program or instructions, and when the computer program or the instructions are executed by a terminal device, the terminal device is enabled to perform the method according to any one of claims 12 to 21.

EP 4 194 892 A1

FIG. 1a

FIG. 1b

Target object

Transmit beam

Receive beam

Transmit optical
component

Receive optical
component

Laser

Sensor

Transmitter

Receiver

Processing
controller

FIG. 2

Pixel

Reset

TDC

Output a
histogram

Histogram
data storage
unit

FIG. 3

dTOF sensing module

Light sensing unit 401

Histogram data storage unit 402

Processing control unit 403

FIG. 4

Pixels 1–8

Bus 1

Bus 2

Switch 11

Switch 12

Switch 21

Switch 22

Histogram data storage unit 1

Histogram data storage unit 2

FIG. 5a

FIG. 5b

Pixels 1–8

Bus 1

Bus 2

Switch 11

Switch 12

Switch 21

Switch 22

Histogram data storage unit 1

Histogram data storage unit 2

FIG. 6a

Pixels 1–8

Bus 1      Bus 2

Switch 11

Switch 12

Switch 21

Switch 22

Histogram data storage unit 1

Histogram data storage unit 2

FIG. 6b

Pixels 1–8

Bus 1    Bus 2

Switch 11

Switch 12

Switch 21

Switch 22

Histogram data storage unit 1

Histogram data storage unit 2

FIG. 6c

FIG. 7a

FIG. 7b

FIG. 7c

FIG. 8a

FIG. 8b

FIG. 8c

FIG. 8d

FIG. 8e

FIG. 8f

FIG. 8g

FIG. 8h

FIG. 8i

FIG. 8j

FIG. 8k

FIG. 8l

FIG. 8m

Gate N light sensitive units based on a target depth resolution and a target distance, and allocate Q time slice bins to each gated light sensitive unit — 901

Perform distance detection in a first mode or a second mode based on the N gated light sensitive units and the Q time slice bins allocated to each gated light sensitive unit — 902

FIG. 9

Terminal device 100

1003 — Displays 1–P

Processor — 1001

1002 — dTOF sensing module

FIG. 10

## INTERNATIONAL SEARCH REPORT

| International application No. |
| --- |
| **PCT/CN2021/103517** |

**A.    CLASSIFICATION OF SUBJECT MATTER**

G01S 7/487(2006.01)i;  G01S 7/486(2020.01)i;  G01S 17/08(2006.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, VEN, CNKI: 激光, 雷达, 测距, TOF, 距离测量, 飞行时间, 存储, 共享, 共用, 时间片, 宽度, 调整, lidar, laser radar, distance, range, TDC, bin, histogram, TCSPC, memory, RAM, ROM

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110312945 A (UNIVERSITY OF EDINBURGH REGENTS) 08 October 2019 (2019-10-08)<br>entire document | 1-23 |
| A | CN 100490506 C (PARKERSYM CORP.) 20 May 2009 (2009-05-20)<br>entire document | 1-23 |
| A | CN 102597693 A (FUJIFILM CORP.) 18 July 2012 (2012-07-18)<br>entire document | 1-23 |
| A | CN 110073244 A (SENSL TECHNOLOGIES LTD.) 30 July 2019 (2019-07-30)<br>entire document | 1-23 |
| A | WO 2020116039 A1 (SONY SEMICONDUCTOR SOLUTIONS CORP.) 11 June 2020 (2020-06-11)<br>entire document | 1-23 |
| A | US 2020137373 A1 (SHARP K. K.) 30 April 2020 (2020-04-30)<br>entire document | 1-23 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 September 2021** | **09 October 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/103517**

| Patent document cited in search report | | | Publication date (day/month/year) | Patent family member(s) | | | Publication date (day/month/year) |
|---|---|---|---|---|---|---|---|
| CN | 110312945 | A | 08 October 2019 | JP | 2020504299 | A | 06 February 2020 |
| | | | | US | 2020116838 | A1 | 16 April 2020 |
| | | | | EP | 3563174 | A1 | 06 November 2019 |
| | | | | WO | 2018122560 | A1 | 05 July 2018 |
| | | | | GB | 201622429 | D0 | 15 February 2017 |
| CN | 100490506 | C | 20 May 2009 | KR | 100778824 | B1 | 22 November 2007 |
| | | | | EP | 1143707 | B1 | 17 February 2010 |
| | | | | JP | 2001285721 | A | 12 October 2001 |
| | | | | CN | 1340962 | A | 20 March 2002 |
| | | | | TW | 548961 | B | 21 August 2003 |
| | | | | KR | 20010083872 | A | 03 September 2001 |
| | | | | EP | 1143707 | A3 | 02 January 2004 |
| | | | | EP | 1143707 | A2 | 10 October 2001 |
| | | | | US | 6975355 | B1 | 13 December 2005 |
| | | | | DE | 60141309 | D1 | 01 April 2010 |
| | | | | JP | 4928674 | B2 | 09 May 2012 |
| CN | 102597693 | A | 18 July 2012 | JP | WO2011058876 | A1 | 28 March 2013 |
| | | | | CN | 102597693 | B | 01 April 2015 |
| | | | | JP | 5214811 | B2 | 19 June 2013 |
| | | | | WO | 2011058876 | A1 | 19 May 2011 |
| | | | | US | 8654195 | B2 | 18 February 2014 |
| | | | | US | 2012229628 | A1 | 13 September 2012 |
| CN | 110073244 | A | 30 July 2019 | DE | 112017005641 | T5 | 22 August 2019 |
| | | | | KR | 20190093611 | A | 09 August 2019 |
| | | | | US | 10416293 | B2 | 17 September 2019 |
| | | | | US | 2018164415 | A1 | 14 June 2018 |
| | | | | WO | 2018108934 | A1 | 21 June 2018 |
| WO | 2020116039 | A1 | 11 June 2020 | CN | 111630409 | A | 04 September 2020 |
| | | | | TW | 202030500 | A | 16 August 2020 |
| | | | | US | 2020348416 | A1 | 05 November 2020 |
| | | | | DE | 112019000310 | T5 | 17 September 2020 |
| | | | | JP | 2020091117 | A | 11 June 2020 |
| US | 2020137373 | A1 | 30 April 2020 | US | 10873740 | B2 | 22 December 2020 |
| | | | | WO | 2018198729 | A1 | 01 November 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010899620